# EUROPEAN PATENT SPECIFICATION

(11) **EP 1 774 635 B1**
(45) Date of publication and mention of the grant of the patent: **13.01.2010**
(21) Application number: 04786160.4
(22) Date of filing: 30.07.2004
(51) Int. Cl.: H02J 1/10

(54) **METHOD AND APPARATUS FOR A POWER SYSTEM FOR PHASED-ARRAY RADAR**
VERFAHREN UND VORRICHTUNG FÜR EIN LEISTUNGSSYSTEM FÜR PHASENGRUPPEN-RADAR
PROCEDE ET APPAREIL POUR SYSTEME D'ALIMENTATION D'UN RADAR RESEAU A COMMANDE DE PHASE

(43) Date of publication of application: 18.04.2007
(73) Proprietor: RAYTHEON COMPANY, Waltham, MA 02451 (US)
(72) Inventor: JACOBSON, Boris, Westford, MA 01886 (US); MCGINTY, John, Hudson, MA 01749 (US); THOMAS, Paul, Leominster, MA 01453 (US)
(74) Representative: Spaargaren, Jerome
(86) International application number: PCT/US2004/024957
(87) International publication number: WO 2006/022675

(56) References cited:
- EP-A- 0 547 418
- EP-A- 0 809 347
- WO-A-02/31943
- WO-A-2004/029749

## Description

### BACKGROUND OF THE INVENTION

Radar is an acronym for "radio detection and ranging." A radar system can be used both to detect position and to detect the movement of objects. Radar systems generally operate in the ultra-high-frequency (UHF) or microwave part of the radio-frequency (RF) spectrum. Radar systems are widely used in air-traffic control, aircraft navigation, marine navigation and in detection systems used in military applications. Radar can also track storm systems, because precipitation reflects electromagnetic fields at certain frequencies. 11

Radar systems use antennas to receive or to send radar signals. In general, an antenna is a device that converts radio-frequency fields into alternating current (AC) or vice-versa.

In electronic signaling, phase is a definition of the position of a point in time (i.e., an instant) on a waveform cycle. A waveform is the representation of how AC varies with time. One example of an AC waveform is the sine wave. The sine wave represents energy concentrated at a single frequency. For example, household utility current has a general sine waveform at 60 Hz. A complete cycle is defined as 360 degrees of phase. Phase can also be an expression of relative displacement between or among waves having the same frequency.

Phase difference, also called phase angle, in degrees is conventionally defined as a number greater than -180, and less than or equal to +180. Leading phase refers to a wave that occurs "ahead" of another wave of the same frequency. Lagging phase refers to a wave that occurs "behind" another wave of the same frequency. When two signals differ in phase by - 90 or +90 degrees, they are said to be in phase quadrature. When two waves differ in phase by 180 degrees (-180 is technically the same as +180), the waves are said to be in phase opposition. Phase is sometimes expressed in radians rather than in degrees. One radian of phase corresponds to approximately 57.3 degrees.

A phased-array radar antenna is a collection of many small radar antennas that are geometrically positioned so that their outputs and received signals are correlated in terms of phase. In a phased-array radar system, beamsteering or beamforming, i.e., control of the radar transmission or reception direction, is electronic instead of mechanical. Electronic control has advantages over mechanical control in that beamsteering can be performed more quickly resulting in faster scan rates than in mechanical systems. Also, a phased-array radar antenna is more reliable as there are no mechanical positioning devices to fail.

The phased-array radar system typically has an array of antenna elements each connected to radar signal generation and reception circuitry. Each antenna element radiates when supplied with radar frequency power ("RF drive signals"), and responds to incident radiation of appropriate frequency by producing a received signal. Received signals are down converted to intermediate frequency (IF) by mixing with a local oscillator (LO) signal. In transmission, the output radar beam direction is controlled by the phase relationship between the RF drive signals to individual antenna elements in the array. If the RF drive signals are all in phase with one another, the output beam direction is perpendicular to the phased-array where the antenna array is a planar system. If the drive signal phase varies linearly with antenna element position across the array, the output beam is inclined at an angle to the array. Altering the rate at which phase varies with position alters the output beam inclination and provides the received signal phase as a function of array position. This may be achieved by varying the LO phase across the array, or by inserting differing delays into received signal paths. An example of a prior art power system is described in WO 2004/029749.

In both reception and transmission, control of signal phase at each individual array element is a prerequisite to viable phased-array radar. Further, it is desirable to provide clean RF drive signals, that is, signals having a minimum amount of noise, because accurate antenna positioning depends an the RF drive signals. Further, it is desirable to have a reliable power supply for antenna reliability particularly since phased-array radar is used in critical situations.

### SUMMARY OF THE INVENTION

Conventional phased-array radar technology does not provide power systems capable of providing full power to a single section of the antenna array when needed, nor does it provide power systems having effective current sharing among power supplies. In one conventional radar power system, each pair of antenna sections shares a transformer. This arrangement has several disadvantages including that full prime power is not available to all antenna sections. For example, where two input transformers provide two independent power channels and supply power to four sections of antenna, only half of the total system power is available to each antenna section. This conventional arrangement works well with an average power system that operates with low duty cycle, high repetition rate pulses and that does not draw pulsed power from a source. In the case of the peak power system operating with long, high duty cycle pulses, the conventional arrangement does not enable concentrating full prime power on one specific section of the antenna. A second disadvantage of the conventional arrangement is that there is inadequate current sharing of parallel redundant power supplies. A power supply feeding a common bus in the conventional system uses an adjustable reference for the voltage regulator loop to implement current sharing. Signals that may adjust the reference include current limit and minimum current. Current sharing between three parallel supplies using this approach is not optimum and can be as unbalanced as, for example, 68% load from the first power supply, 31 % load from the second power supply, and 1% load from the third power supply. This approach results in imperfect current sharing, and therefore more power supplies are required. Embodiments of the present invention significantly overcome such deficiencies and provide methods and apparatus for a power system for phased-array radar with a multiphase transformer, a plurality of power converters and a common bus. The plurality of power converters are connected in parallel to the multiphase transformer and the common bus and each power converter has a multi-sloped power output characteristic to enable power sharing by said plurality of power converters. Each of the power converters comprises an output voltage loop controller, an output power loop controller and an output current loop controller. The output voltage loop controller, the output power loop controller and the output current loop controller together provide the multi-sloped power output characteristic of the power converter. A constant voltage is provided in a voltage mode controlled by the output voltage loop controller. An increasing current is provided while voltage is decreasing in a constant power mode controlled by the output power loop controller. A constant current is provided in a current mode controlled by the output current loop controller. The common bus is, preferably, balanced with respect to chassis ground reducing noise and improving operating safety. Preferably, the power converters (which are preferably AC/DC converters) share power by modifying output impedance as a function of load without external control signals. The system, preferably, also has several layers of fault detection. Preferably, the power converters are coupled at their outputs to common DC bus.

In one embodiment of the invention, the power system uses one multiphase transformer and a plurality of AC/DC converters to feed a common 300 V DC bus. The converters are connected in parallel to the common bus. The common bus feeds all sections of the antenna array. The bus is balanced at +150 V/-150 V with respect to chassis ground. The multiphase transformer is rated for a maximum simultaneous load for all sections of the antenna array. The converters operate independently and share power without common internal or external control signals. The independent operation of the converters improves reliability of the power system because a source of single point failures is eliminated from the power system. Further, the optimized power sharing reduces the total number of converters in the power system thus further improving power system reliability. The shared bus enables the power System to apply full power to a single antenna section when needed without oversizing individual power system components. Therefore, the power system is functional in both average load and in peak load systems.

The AC/DC converters share power on the common bus using a technique involving a control circuit having at least three feedback loop controllers. Each AC/DC converter has a control circuit including a voltage loop controller, a power loop controller, and a current loop controller. At light loads, the voltage loop controller runs the converter. At higher loads, the output voltage drops out of regulation, the power loop controller takes over and the converter provides fundamentally constant power output. In the constant power mode, the output impedance of the converter appears similar to the output impedance of a loss-less resistor. If the load continues to increase and exceeds the rated current of the AC/DC converter, the third, current loop controller takes over. The three controllers provide a multi-sloped output characteristic to the common bus enabling power sharing without a centralized control signal.

When the radar array is in an idling state or when the radar array is drawing a minimum load, a single converter, the converter having the highest output voltage, operates in the essentially constant voltage mode and provides the full load to the antenna array. The other power supplies connected to the common bus are blocked by reverse-biased diodes. Once the radar array begins transmitting, the single converter reaches its power limit and transitions into the constant power mode. Output voltage in the constant power mode drops below a constant power mode regulation point and other converters start feeding the common bus. The rate of voltage decline depends on the value of the capacitance connected to the common bus. The slope of the output characteristic is steep in the constant power mode, and therefore the output power is substantially equally divided between the converters. Each converter has a constant power limit that is not exceeded.

The common DC bus provides power to all antenna sections. Therefore, any single antenna section can, when needed, draw full system power. The common bus is balanced with respect to chassis ground. In one embodiment of the invention, the bus has a +150 V line and a -150 V line. An advantage of the balanced bus is reduced ripple and noise component caused by common-mode current flowing through both +150 V and -150 V conductors and returning through the chassis ground conductor. Another advantage of the balanced distribution is the reduced voltage between conductors and chassis ground that reduces probability of corona and arcing in densely packaged assemblies operating in humid environments. The balanced high voltage bus has a ground fault protection circuit that can detect and differentiate between line-to-line and ground faults that occur in different parts of the system on the same side of an isolation boundary.

In general, where there is a group of converters connected in parallel to a common load, it is diffcult to distinguish internal faults (that is, power converter faults) from external faults (that is, load faults). A line-to-line ("short circuit") failure, whether internal or external to a converter, can be easily detected and isolated. Each converter has an over-current protection circuit that detects that the converter has a short circuit fault. The control circuit of the failed converter then shuts the unit off. The converters in the present invention each have isolating diodes that isolate internal faults from the common bus under specific circumstances. If a converter has an internal fault prior to the isolating diodes, the voltage across the converter's output prior to the isolating diodes goes to zero, and this fault is isolated from the common bus by the diodes because the diodes are reverse biased. In the event of an over-load on the common bus, all the converters shut down indicating a common bus fault.

Line-to-ground ("ground") faults, however, present a detection problem because ground fault current is limited and does not activate the over-current protection of the individual converter. If a converter feeding the common bus has an internal ground fault, the converter shifts the whole common bus from +150 V and -150 V to either 0V and -300 V or 0V and +300 V. All converters feeding the bus report a fault making it difficult, without additional information, to detect and isolate the failed unit. In the present invention, each converter has a time delay component which delays fault signals external to individual converters. The time delay component is a common-mode ("balun") filter at the output of each power supply connected to the bus. A ground fault detection circuit monitors voltage across a ground fault sensing resistor. The filter's L/R time constant allows differentiating between ground faults at the individual supply output and at the common bus. In the case of failure of a converter output component, its ground fault signal has a faster rate of rise compared to the same signal from a good unit. Once the faster signal identifies the failed unit, the power system controller takes the failed converter off the bus, and the power system resumes normal operation. The total fault current equals to the sum of current from all units connected to the bus.

In the event of a load ground fault, every converter generates a substantially similar slow-rising signal and the power system controller does not shut down any units. Each converter provides a limited amount of ground fault current that does not interrupt its normal operation. The total current flowing through the ground fault equals to the sum of currents of individual power supplies. Thus, protective devices (fuses or circuit breakers) are sized to interrupt the total ground fault current provided by all power supplies connected to the common bus. A sensing resistor limits the ground fault current below the power supply over-current limit and above the fraction of the minimum current required for fault isolation. In an alternative embodiment of the invention, voltage-clamping devices such as zener diodes or crowbar action devices such as thyristors are connected from the chassis ground to +150V and from the chassis ground to -150V before the isolating diodes. Zener diodes and the crowbar action devices detect and isolate ground faults, but their operation relies on creating a momentary short circuit at the bus that can result in a sever transient or even a catastrophic fault of the power system.

An input/output common bus fault detector monitors power delivered to and taken from the common bus. The sum of input and output currents to the common DC bus is monitored using Hall effect sensors. Since energy storage capacitors are decoupled from the bus by diodes, at any instant in time, the input and output current should be approximately equal. A ground fault on the common bus manifests itself as a difference between input and output current and the fault can be detected in, for example, a few microseconds.

### BRIEF DESCRIPTION OF THE DRAWINGS

The foregoing and other objects, features and advantages of the invention will be apparent from the following description of particular embodiments of the invention, as illustrated in the accompanying drawings in which like reference characters refer to the same parts throughout the different views.
Figure 1 is a block diagram of a phased-array radar system according to principles of the present invention;
Figure 2 is a block diagram of one of the AC/DC converters of Figure 1;
Figure 3 is a graph of the power output of a first AC/DC converter of Figure 2 exhibiting a multi-sloped characteristic;
Figure 4 is a flow chart of the operation of the AC/DC converters in supplying power according to principles of the invention;
Figure 5 is a block diagram of a pair of AC/DC converters of Figure 1;
Figure 6 is a block diagram of the power system controller of Figure 1 according to principles of the invention;
Figure 7 is a flow chart of the operation of the power system controller of Figure 1;
Figure 8 is a graph of bus voltages versus time under a converter ground fault in a converter of Figure 1;
Figure 9 is a graph of waveforms under a converter ground fault in a converter of Figure 1;
Figure 10 is a graph of a load fault current and of a fault signal from a first converter and a fault signal from a second converter of the converters of Figure 1;
Figure 11 is a block diagram of a portion of the power system of Figure 1 including Hall effect sensors to detect a bus fault according to principles of the invention; and,
Figure 12 is a block diagram of a generalized system according to principles of the invention having a plurality of power converters and a plurality of loads coupled to a common bus.

### DETAILED DESCRIPTION

A power system for a phased-array radar system powers an antenna array with a single multiphase transformer. A plurality of AC/DC converters are connected in parallel between the single multiphase transformer and a common bus. The common bus is balanced with respect to chassis ground reducing noise and improving operating safety of the antenna. Each AC/DC converter has a multi-sloped characteristic which enables the converters to share power by modifying output impedance as a function of load without external control signals. The system also has several layers of fault detection.

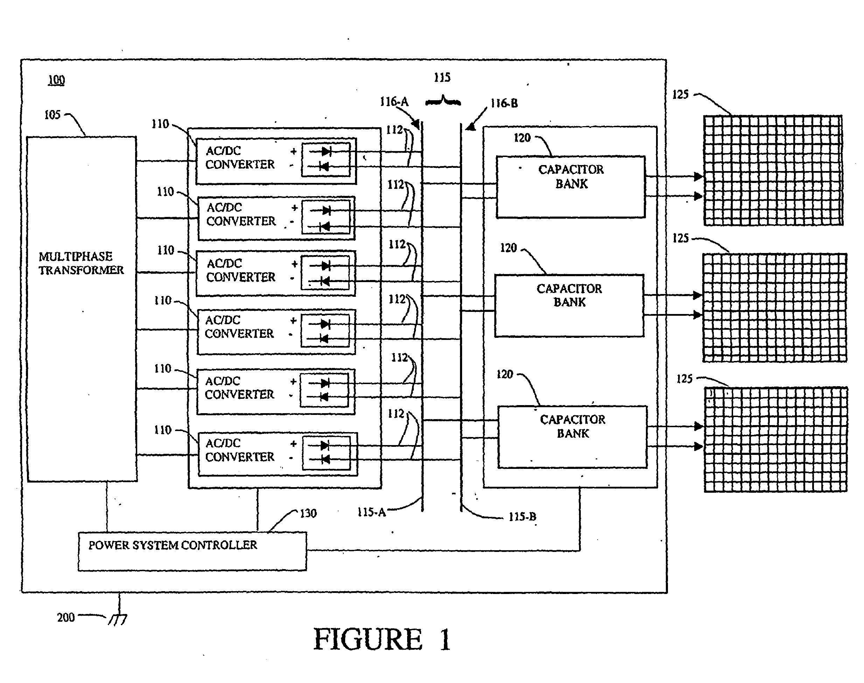

Figure 1 is a block diagram of a phased-array radar system according to principles of the present invention. The phased-array radar system has a power system 100 and an array of antenna sections 125. The power system 100 includes a multiphase transformer 105, a plurality of AC/DC converters 110, a common bus 115, a plurality of capacitor banks 120 and a power system controller 130. The AC/DC converters 110 are coupled in parallel between the multiphase transformer 105 and by a pair of conductor lines 112 to the common bus 115. Each antenna section 125 is coupled to the common bus 115 through one of the capacitor banks 120. The capacitor bank 120 is a bank of energy-storing capacitors providing power when the load drops below the a constant voltage regulation point set in the converters 110 as will be described later below.

During operation, the multiphase transformer 105 feeds the AC/DC converters 110. The AC/DC converters 110, also referred to as power supplies, feed the common bus 115. The common bus 115 feeds a plurality of antenna sections 125.

In one embodiment of the invention, the multiphase transformer 105 is rated for a maximum simultaneous load for all sections of the antenna array 125. An example of a multiphase transformer which is suitable for use as the multiphase transformer 105 is disclosed in U.S. Patent No. 6,424,552, the teachings of which are hereby incorporated by reference in their entirety. The invention is not limited to this transformer. The use of other types of multiphase transformers is considered to be within the scope of the invention.

The common bus 115 is balanced with respect to chassis ground. That is, the common bus 115 includes a first bus line 115-A which carries a first power supply signal 116-A, and a second bus line 115-B which carries a second power supply signal 116-B, and the magnitude of voltage difference between each of the two signals 116-A, 116-B lines and ground 200 is the same. In one embodiment of the invention, the common bus 115 is a 300 V DC bus is balanced at +150 V/-150 V with respect to the power system chassis ground 200. An advantage of the balanced bus is reduced ripple and noise in the bus signal caused by common-mode current flowing through the lines of the bus 115 and returning through the chassis ground conductor. Common-mode current is an unwanted current flowing through both lines 115-A and 115-B and returning through the chassis. Common-mode current is caused by power system components that operate with pulsed or periodically switching voltage. The magnitude of the common-mode current is proportional to the rate of voltage change across a component and the value of parasitic capacitance between the component and the chassis ground. The greater the difference between the impedances of the lines 115-A and 115-B, the larger the common-mode voltage noise signal generated by the common-mode current. Balancing the bus with respect to ground reduces the common-mode component of the voltage noise at the load.

Another advantage of the balanced distribution for the common bus is the reduced voltage between conductors (i.e., the bus lines 115-A and 115-B) and chassis ground that reduces probability of corona and arcing in densely packaged assemblies particularly in systems operating in humid environments. The shared bus 115 enables the power system to apply full power to a single antenna section when needed without oversizing individual power system components.

The AC/DC converters 110 operate independently and are optimized because they share power, without internal or external control signals, by modifying output impedance as a function of load. The AC/DC converters 110 are, for example, 16 kW converters. The independent operation of the converters 110 improves reliability of the radar system because the failure of one converter does not drive the whole system to failure. Further, the optimized use of power reduces the number of converters needed thus freeing bus locations for redundant converters and further improving power system reliability.

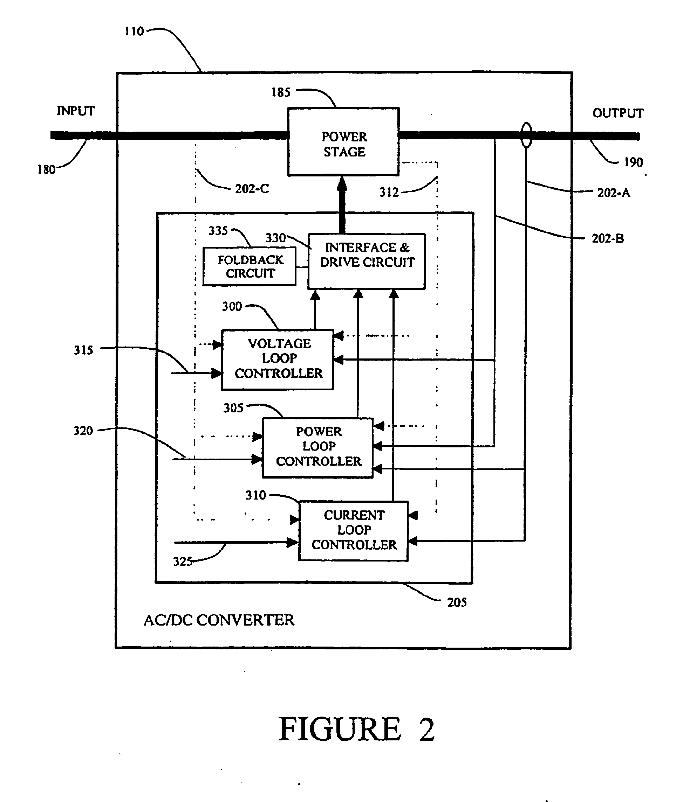

Figure 2 is a block diagram of one of the AC/DC converters of Figure 1. The AC/DC converter 110 has an input 180, a power stage 185, an output 190 and a control circuit 205. The input 180 provides an input voltage to the power stage 185 that performs the power conversion and provides an output voltage at the output 190. The control circuit 205 has an interface and drive circuit 330 (hereinafter, the drive circuit 330) and outer loop feedback controllers 300, 305, 310 taking a plurality of feedback signals 202-A, 202-B, 312, an input voltage feedforward signal 202-C and a foldback circuit 335. A voltage loop controller 300 takes an output voltage signal 202-B from the converter output 190. The voltage loop controller 300 also takes an inner feedback signal 312 from the power stage 185, an input voltage feed-forward signal 202-B from the converter input 180, and a voltage reference signal 315 defined in the converter circuit 205. A power loop controller 305 takes the output voltage signal 202-B from the converter output 190, an output current signal 202-A from the converter output 190, the inner feedback signal 312 from the power stage 185, the input voltage feed-forward signal 202-C from the converter input 180, and a power reference signal 320 defined in the converter circuit 205. The current loop controller 310 takes the output current signal 202-A from the converter output 190, the inner feedback signal 312 from the power stage 185, the input voltage feed-forward signal 202-C from the converter input 180, and a current reference signal 325 defined in the converter circuit 205. The feedback loop controllers 300, 305, 310 enable the converter 110 to share power on the common bus 115 with the other converters 110. In sharing power, each converter 110 supplies substantially the same amount of power as each other converter 110. The input voltage feed-forward signal 202-C from the converter input 180 and the inner feedback signal 312 from the power stage 185 improve stability characteristics of the voltage, power and current outer feedback loops controlled by the controllers 300, 305, 310.

During operation, the converter output current signal 202-A and output voltage signal 202-B are sent to the control circuit 205. Using the drive circuit 330, the control circuit 205 activates only one controller 300, 305, 310 at one time and so only one of the feedback loops formed by the signals 202-A, 202-B, and controllers 300, 305, 310 "controls" the converter 110 at any moment in time. When the antenna array 125 is in an idling state or when the radar array 125 is drawing a minimum load (i.e., a minimum amount of power), a single converter 110, the converter having the highest output voltage, here, for example converter 110-1, provides the full load (i.e. a maximum amount of power) to the antenna array 125. While Figure 2 shows one embodiment of the converter 110, it will be understood that various modifications may be made without departing from the spirit and scope of the invention.

The AC/DC converters 110 operate to provide power to the antenna array. When the antenna array 125 is idling or when its power needs are low, only one converter 110 is able to supply all the power needed by the antenna array 125. When the antenna array 125 is transmitting, its power needs are greater than when the antenna array 125 is in the idle mode, and more than one converter 110 is needed to supply power to the antenna array 125. The present invention enables the converters to adjust themselves to the power demands made on them by the antenna array 125 in order to balance the power provided among the converters.

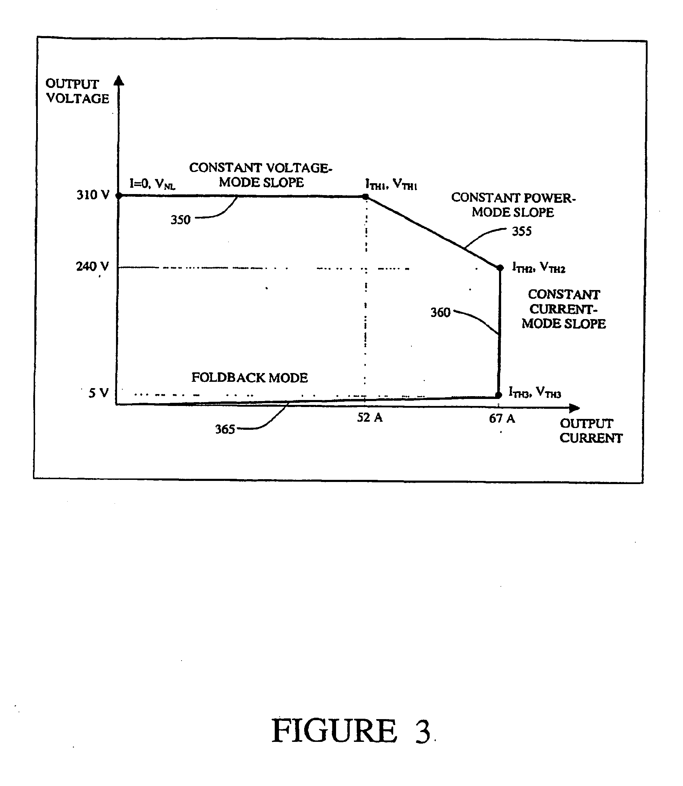

Figure 3 is a graph of the output voltage of the converter 110 as a function of its output current. Unless stated otherwise, in the following description, output voltage and output current are average output voltage and average output current respectively.

The function in Figure 3 exhibits a multi-sloped characteristic. The general slope definition of the curve shown in Figure 3 is the increment of the output voltage ΔV divided by the increment of the output current ΔI. The multiple slopes include voltage-mode slope 350 where the antenna array 125 is in idle mode and its power needs are low, a constant power-mode slope 355 where the antenna array 125 is transmitting and its power needs are great, a current-mode slope 360, and a foldback-mode slope 365. The last two slopes, the current-mode slope 360 and the foldback-mode slope 365 pertain to start up or overload conditions of the power system. For the characteristic shown in Figure 3 where slope 350 = 0 (constant voltage) and slope 360 = ∞ (constant current), any set of slopes that satisfies the conditions 0 < I_{TH1} < I_{TH2} ≤ I_{TH3} and 0 ≤ V_{TH3} < V_{TH2} < V_{TH1} ≤ V_{NL}, is within the scope of this invention, where I_{TH1} is a first current threshold and V_{TH1} is a first voltage threshold between voltage mode operation and constant power-mode operation of the converter 110; I_{TH2} is a second current threshold and V_{TH2} is a second voltage threshold between constant power-mode operation and current-mode operation of the converter 110; I_{TH3} is a third current threshold and V_{TH3} is a third voltage threshold between current-mode operation and foldback-mode operation of the converter 110; and V_{NL} is the output voltage at no load. I_{TH1} and V_{TH1} are defined by the voltage loop controller 300 relative to the voltage reference signal 315. I_{TH2} and V_{TH2} are defined by the power loop controller 305 relative to the power reference signal 320. I_{TH3} is defined by the current loop controller 310 relative to the current reference signal 325 and V_{TH3} is defined by the foldback circuit 335. When the antenna array 125 is idling, typically only one converter 110-1 is needed to provide sufficient power to the antenna array. That converter 110-1 is the converter 110 having the highest output voltage among the converters 110. As the antenna array 125 transmits, the voltage at the converter 110-1 output and at the capacitor banks 120 drops as shown in the constant power slope 355 and other converters having lower output voltages than the first converter 110-1 begin feeding the antenna array 125 along with the converter 110 having the highest output voltage.

Specifically, at idling and at light loads, the voltage loop controller 300 controls the converter 110 and provides a substantially constant output voltage at, for example 310 V, as shown in Figure 3 in the constant voltage slope 350. When the output voltage feedback signal 202-B coming to the voltage loop controller 300 drops below the voltage reference signal 315 because the load on the bus 115 has increased, control of the converter 110 shifts to the power loop controller 305 that maintains nearly constant power at the output of the converter 110. That is, typically when the radar array begins transmitting, the converter 110 reaches its power limit and transitions into the constant output power mode regulated by the power loop controller 305. The power loop controller 305 controls the converter 110 enabling it to adjust voltage and current to provide a substantially constant output power as shown by the constant power slope 355 in Figure 3. The power-mode slope shown in Figure 3 is fixed, providing an approximation of the constant power function. It will be understood that other implementations of the constant power mode are possible including those using non-linear functions such as V*I = P where V is the output voltage, I is the output current, and P is the constant output power. The constant power is for example 16 kW. While the converter 110 is providing constant power, the output impedance of the AC/DC converter 110 appears similar to the output impedance of a loss-less resistor. As the output voltage of the converter 110 providing constant power drops, the other converters 110, which have lower output voltages than the converter 110, start feeding the common bus 115 in addition to the first AC/DC converter 110. The constant power slope 355 is steep and therefore the output power is substantially equally divided among the converters 110. As the voltage drops below the output voltage threshold V_{TH1} in each converter 110 during the constant power mode, the additional converters 110 are activated. As the antenna array 125 increases its demand for power as it is transmitting, more converters 110 begin to provide power until the power capability of the power system is reached. Each converter 110 has a constant power limit set up by the power reference signal 320 that is not exceeded. At the point where the current limit that is established by the current reference signal 325 is reached, the current loop controller 310 takes over and the converter 110 transitions into the current mode. In the current mode, the converter 110 provides substantially constant current of, for example, 67 amps, as shown by the constant current slope 360. The current mode is activated when a load with storage capacitance is initially applied and thus requires charging as part of the power up cycle. This mode also performs a current limiting function when the converter is overloaded. In the event of a short circuit fault at the output, the converter 110 stays in the current mode until the output voltage drops below the threshold V_{TH3}. For any voltage below this level the converter 110 operates in the region of the over-current foldback mode with positive slope 365. Methods of circuit implementation of this mode are well known in the art and often involve periodic turning the converter on and off with a small duty cycle.

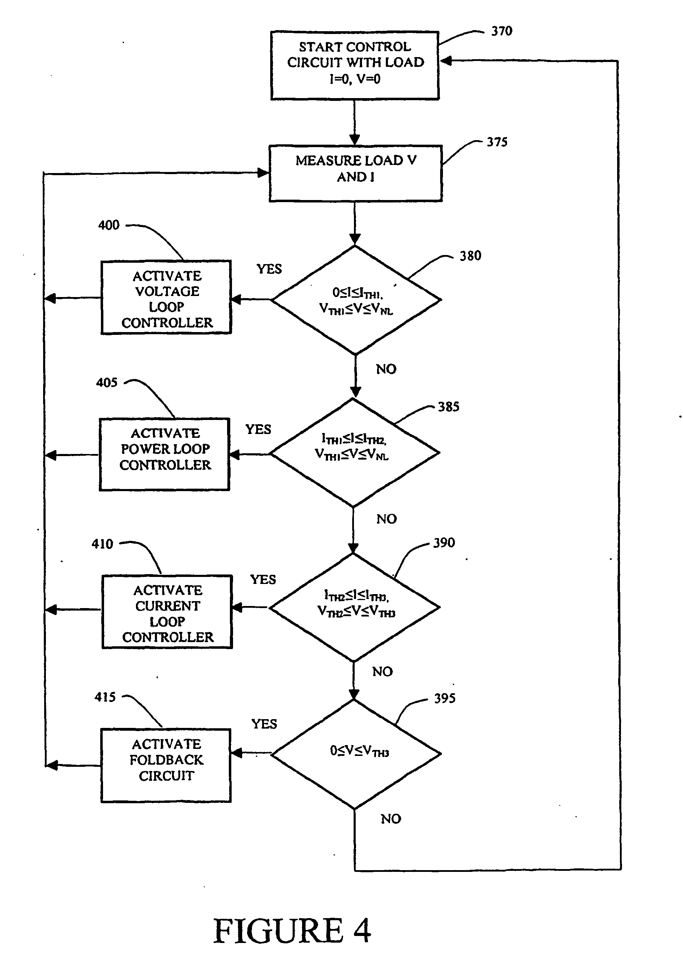

Figure 4 is a flow chart of the operation of the control circuit 205 of Figure 2. At step 370, the control circuit 205 starts with output voltage V=0 and output current I=0. At step 375, the converter 110 is operating and control circuit 205 measures the output voltage V and output current I using data received as feedback signals from the converter output 190.

At step 380, the control circuit 205 compares the output voltage V and output current L to a first voltage threshold V_{TH1} and a first current threshold I_{TH1} respectively. If the output current I is greater than zero and less than the first current threshold I_{TH1}, and the output voltage V is greater than a first voltage threshold V_{TH1} and less than the voltage at no load, then the control circuit 205 proceeds to step 400. At step 400, the control circuit 205 activates the voltage loop controller 300 and returns to step 375 under the control of the voltage loop controller 300. If at step 380, the output current I and output voltage V do not fall within the described current and voltage ranges, the control circuit 205 proceeds to step 385.

At step 385, the control circuit 205 compares the output voltage V to the first voltage threshold V_{TH1} and the second voltage threshold V_{TH2}, and output current I to the first current threshold I_{TH1} and to a second current threshold I_{TH2}. If the output voltage V is greater than a second voltage threshold V_{TH2} and less than the first voltage threshold V_{TH1}, and the output current I is greater than the first current threshold I_{TH1} and less than the second current threshold I_{TH2} then the control circuit 205 proceeds to step 405 and activates the power loop controller 305 and returns to step 375 under the control of the power loop controller 305. If at step 385, the output current and voltage do not fall within the described current and voltage ranges, the control circuit 205 proceeds to step 390.

At step 390, the control circuit 205 compares the output voltage V to the second voltage threshold V_{TH2} and a third voltage threshold V_{TH3}, and the output current I to the second current threshold I_{TH2} and a third current threshold I_{TH3}. If the output voltage V is greater than a third voltage threshold V_{TH3} and less than the second voltage threshold V_{TH2} and the output current I is greater than the second current threshold I_{TH2} and less than the third current threshold I_{TH3}, then the control circuit 205 proceeds to step 410 and activates the current loop controller 310. The control circuit 205 then returns to step 375 under the control of the current loop controller 305. In this constant current mode, the converter 110 recharge the capacitors in the capacitor banks 120. If at step 390, the output current I and voltage V do not fall within the described current and voltage ranges, the control circuit 205 proceeds to step 395.

At step 395, the control circuit 205 compares the output voltage V to the third voltage threshold V_{TH3}. If the output voltage V is greater than zero and less than the third voltage threshold V_{TH3}, then the control circuit 205 proceeds to step 415 and activates the foldback circuit 335. In alternative embodiments of the invention, the foldback mode is activated by other triggers, for example, by an instantaneous current that exceeds I_{TH3}. When the converter operates in the foldback mode, the output voltage is less than the third voltage threshold V_{TH3} and the average output current is less than the third current threshold I_{TH3}. The control circuit 205 then returns to step 375 and continues operating and measuring output voltage and output current. In one implementation of the foldback mode, the control circuit periodically turns the converter on and off with a small duty cycle and a period that is relatively large with respect to the period of the switching frequency of the converter 110. For example, if the switching frequency period of the converter is 5 microseconds, the foldback period is 1 second, the on time of the converter is 100 milliseconds, the off time is 900 milliseconds and the foldback duty cycle is 10%. The control circuit 205 then returns to step 375. If at step 395, the output current and voltage do not fall within the described current and voltage ranges, then the control circuit returns to step 370, the start.

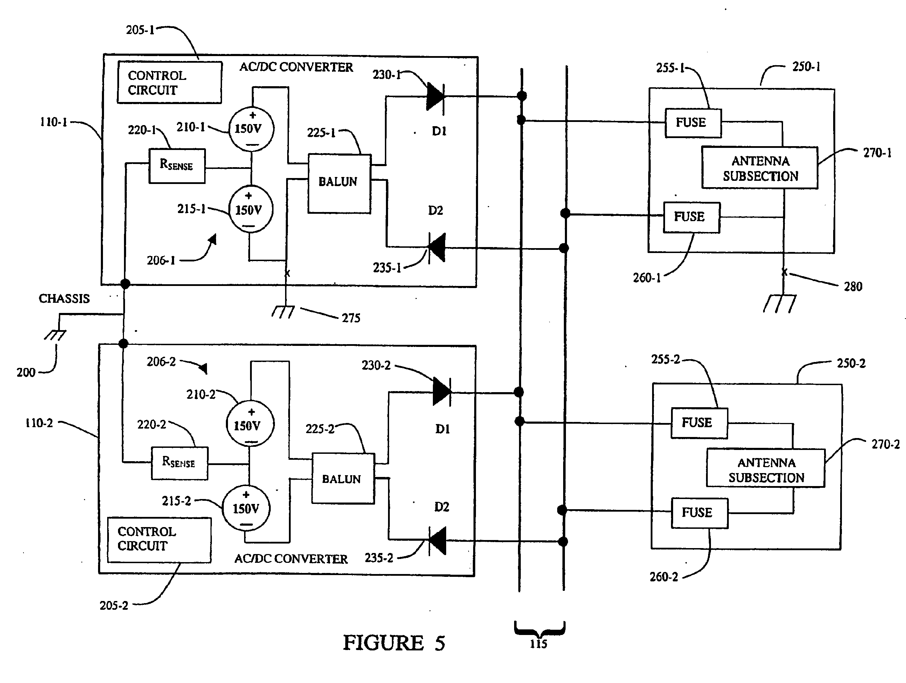

The present invention further includes fault detection components. The power system of the present invention has the capability to detect and isolate ground faults. Where the fault occurs in a converter 110, the power system 100 can take the faulty converter off-line and a redundant converter can be activated. The feature of the invention will be explained further with reference to Figure 5.

Figure 5 is a block diagram of a pair of the AC/DC converters of Figure 1 connected in parallel to the common bus 115. A first AC/DC converter 110-1 has a control circuit 205-1. The first AC/DC converter 110-1 also has an output section with a fault detection circuit 206-1 having a first voltage source 210-1, a second voltage source 215-1, a sensing resistor RSENSE 220-1, a common-mode inductor ("balun") 225-1, a first isolation diode 230-1 and a second isolation diode 235-1. A second AC/DC converter 110-2 also has a control circuit 205-2. The second AC/DC converter 110-2 has a second output section with fault detection circuit 206-2 having a first voltage source 210-2, a second voltage source 215-2, a sensing resistor SENSE 220-2, a common-mode inductor ("balun") 225-2, a first isolation diode 230-2 and a second isolation diode 235-2. Alternative embodiments of the invention use other semiconductor devices (e.g. thyristors, and transistor-diode combinations). Further alternative embodiments use electromechanical devices instead of isolating diodes 230, 235. In one embodiment of the invention, the voltage sources are transformer windings. Both the first AC/DC converter 110-1 and the second AC/DC converter 110-2 are coupled to chassis ground 200. As an example for describing fault detection, it may be the case that the first AC/DC converter 110-1 has an internal ground fault 275.

Also connected to the common bus 115 are blocks 250-1, 250-2 representing antenna subsections 270-1, 270-2 connected to the power system 100. The antenna subsections 270-1, 270-2 are suitable for use as antenna sections 25 of Figure 1. Each antenna subsection 270-1, 270-2 is coupled to a first fuse 255-1, 255-2 and a second fuse 260-1, 260-2 coupled to either side of the antenna section 270-1, 270-2. In alternative embodiment, the fuses could instead be circuit breakers.

Where a group of converters is connected in parallel to a common device drawing power, it is difficult to distinguish internal from external faults. A line-to-line ("short circuit") failure, whether internal or external to a converter, can be easily detected and isolated. Each converter 110 has a converter over-current protection circuit configured to detect an internal short circuit fault within the converter if such a fault exists. After detecting an internal fault, the converter controller 205 of the failed converter then shuts the unit off. The converters 110 in the present invention each have isolating diodes 230, 235 that isolate internal faults from the common bus 115 under specific circumstances. If a converter 110 has an internal fault prior to the isolating diodes 230, 235, the output voltage before the diodes 230, 235 goes to zero, and this fault is isolated from the common bus 115 by the diodes 230, 235 because they are reverse biased. In the event of an over-load on the common bus 115, all the converters 110 shut down indicating a common bus fault.

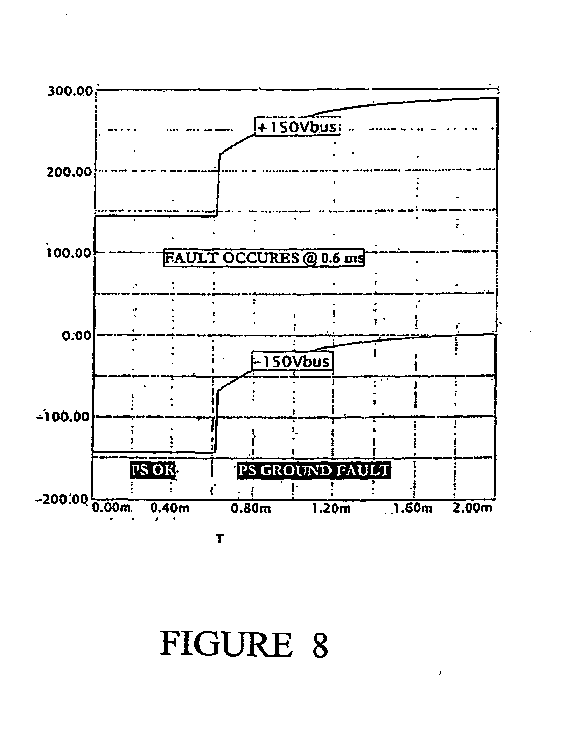

Line-to-ground ("ground") faults 275, 280, however, present a detection problem because a single ground fault current is limited and does not activate the over-current protection of the individual converter. In the event that a converter 110-1 feeding the common bus 15 has an internal ground fault 275, the converter 110-1 shifts the whole common bus from +150 V and -150 V to either 0V and -300 V or 0V and +300 V as shown in Figure 8. Figure 8 is a graph of bus voltages versus time under a converter (or power supply) ground fault. All converters 110 feeding the bus 115 report a fault to the power system controller 130. In the present invention, a fault signal from each converter 110 has the time delay characterized by a time constant 2L/RsENSE where L is the single-leg inductance of the balun 225. The time delay introduced into the fault signal enables the power supply controllers 205 to distinguish the converter having the internal ground fault 275 from the converter 110 without the fault. The time delay in this embodiment of the invention is formed by the common-mode inductor ("balun") 225 at the output of each converter 110 and by the sensing resistor, RSENSE. A common-mode inductor has at least two coupled windings wound on the same magnetic core. In the AC/DC converter 110, the start of one winding is connected to the voltage source 210 and the start of another winding is connected to the voltage source 215. The finish of the first winding is coupled to the anode of the diode 230 and the finish of the second winding is coupled to the cathode of the diode 235. For this connection, magnetic fields produced by the currents flowing through conductors 112 cancel each other and the resultant magnetic flux in the core is essentially zero. Operation of the balun and sensing resistor in producing the time delay is explained below for two converters that are connected in parallel to the common bus where one of the converters develops an internal ground fault. In this case, the ground fault current in the good converter flows through its sensing resistor and through one leg of its balun and returns through one leg of the balun of the failed converter thereby producing a fault signal with a time delay characterized by the 2L/ RSENSE time constant. In the failed converter, ground fault current bypasses the balun through the ground fault and therefore the rise time of the fault signal of the failed converter is fast. Under normal operation of a converter 110, there is no current at the sensing resistor 220. The presence of voltage across the sensing resistor 220 indicates a ground fault, either internal or external. The value of the sensing resistor 220 is selected using two criteria. The first criterion puts the upper limit on the value of the sense resistor 220 so that the ground fault current limited by the resistor 220 does not interrupt operation of the power supply and does not damage the system structure. The second criterion puts the lower limit on the value of the sense resistor 220 so that the sum of ground fault currents generated by all converters 110 present in the system 100 has sufficient magnitude to activate system ground fault protection devices.

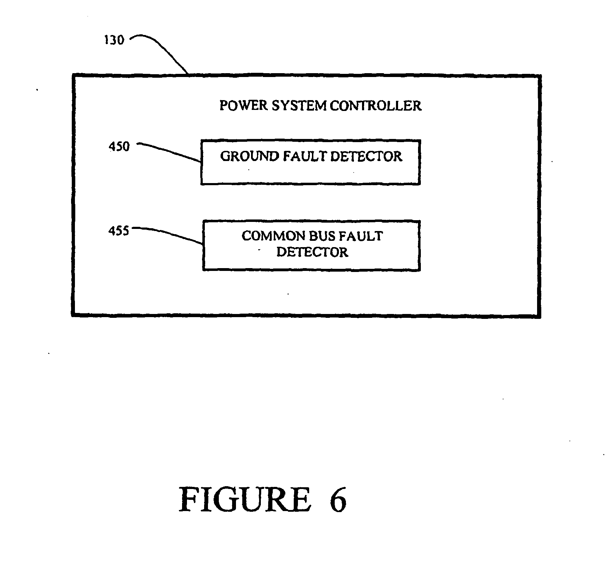

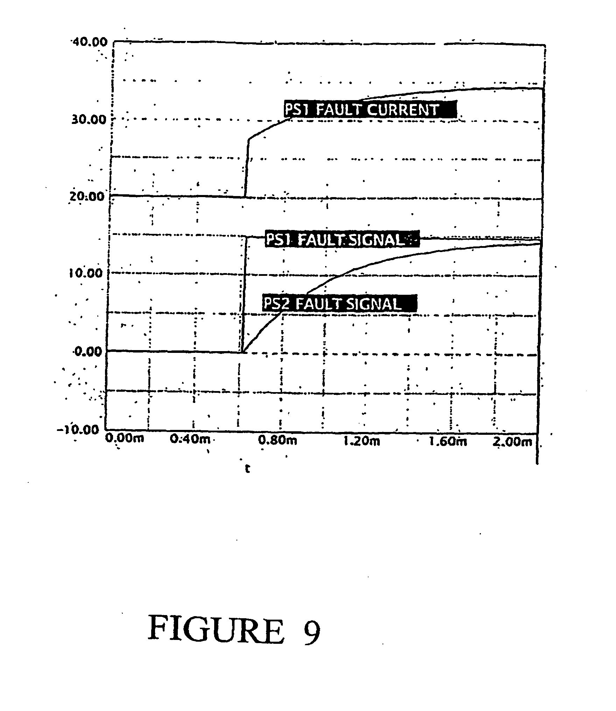

Figure 6 shows a block diagram of the power system controller 130 of Figure 1. The power system controller 130 includes a ground fault detector 450 described immediately below and a common bus fault detector 455 described later below. In alternative embodiments of the invention, fault detection may be totally or partially decentralized using multiple controllers distributed throughout the power system 100. The ground fault detector 450 receives ground fault signals from the converters 110. Where there is an internal ground fault, the 2L/ RSENSE time constant of the balun 225 and the sensing resistor 220 enables the power system controller 130 to differentiate between ground faults at the individual supply and at the common bus 115. Figure 9 shows a graph of waveforms under a converter ground fault. Figure 9 is a graph of wave amplitude versus time. In the case of failure of a converter 110, the failed converter's ground fault signal from the sensing resistor 220 has a faster rate of rise compared to the same signal from a good unit. Once the ground fault detector 450 in the power system controller 130 detects the faster signal of the failed unit, the power system controller 130 takes the failed unit off the bus, and the power system resumes normal operation. The fault current equals to the sum of current from all units connected to the bus.

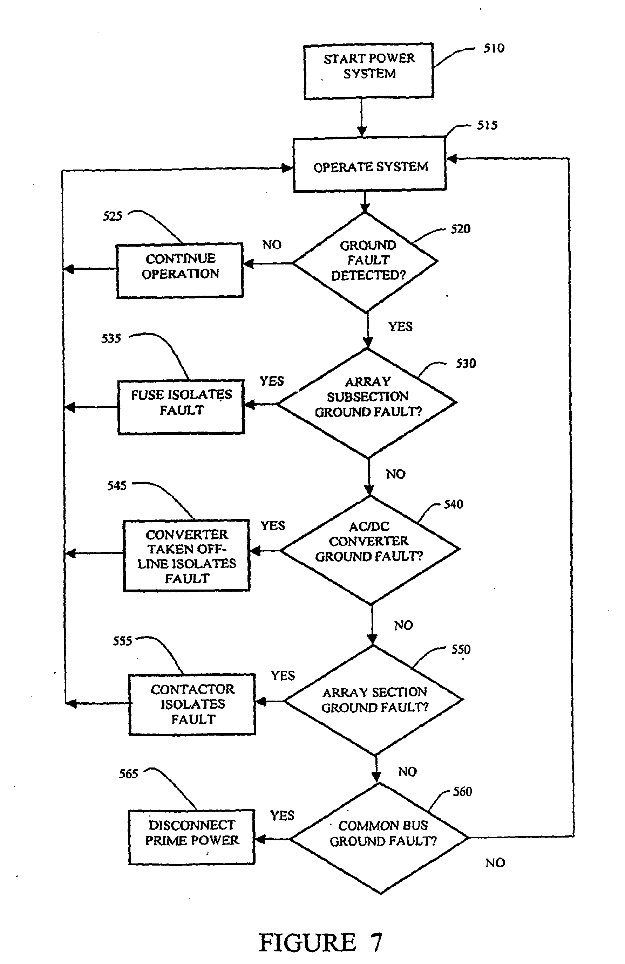

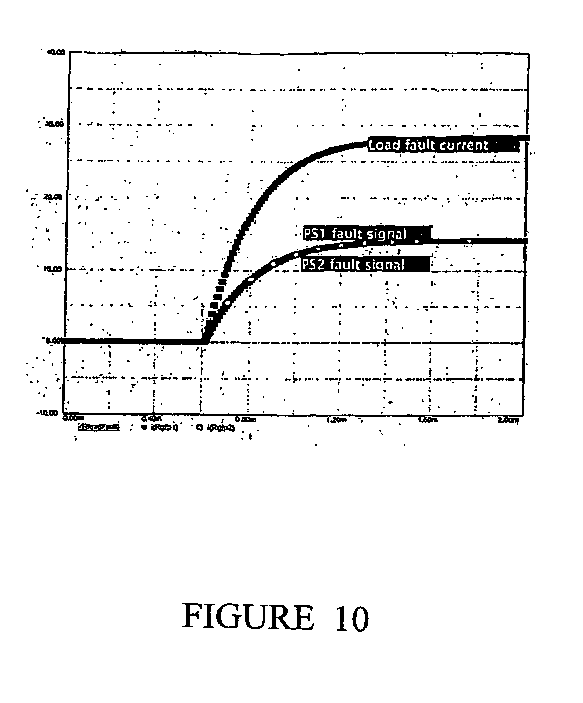

Figure 7 is a flow chart showing the operation of the power system controller 130. At step 510, the power system 100 is powered on. At step 515, the power system controller 130 operates. At step 520, the ground fault detector 450 monitors for ground faults. If no ground fault is detected, the power system controller 130 continues to operate, step 525. If the ground fault detector 450 detects a ground fault, the power system controller 130 proceeds to step 530. An example of an external ground fault is shown in Figure 5 where an antenna subsection 270-1 has an external ground fault 280. In the event of a load ground fault (e.g., the "external" ground fault 280), every converter 110 generates a substantially similar slow-rising signal detected across the sensing resistor 220-1, 220-2, and the power system controller 130 does not shut down any units. The ground fault detector 450 uses the slow-rising signal as an indicator of an external ground fault (that is, a load or distribution fault) as opposed to an internal ground fault (that is, a converter fault). Figure 9 shows a graph of a load fault current, that is, the current at the ground fault, and of a fault current measured at sensing resistor 220-1 from a first converter 110-1 and a fault signal current measured at the sensing resistor 220-2 from a second converter 110-2. Figure 10 shows the amplitude of the signal versus time. Each converter 110-1, 110-2 provides a limited amount of ground fault current through the sensing resistor 220-1, 220-2 that does not interrupt its normal operation. The ground fault detector 450 uses the sensing resistor 220 data to further isolate the ground fault. The sensing resistor 220-1, 220-2 limits the ground fault current below the power supply over-current limit and above a fraction of the minimum current required for fault isolation. In an alternative embodiment of the invention, a voltage-clamping device is connected before the isolating diodes. The voltage-clamping device detects and isolates ground faults, but its operation relies on creating a momentary short circuit at the bus that can result in a catastrophic fault of the power system.

At 530, the power system controller 130 determines whether the ground fault is in an array subsection. At step 535, if the ground fault is in an array subsection, the fuses 255, 260 isolate the fault from the power system 100. The total current flowing through the ground fault equals to the sum of currents of individual power supplies. Therefore, the protective devices 255-1, 255-2, 260-1, 260-2 (fuses or circuit breakers) are sized to interrupt the total ground fault current provided by all power supplies connected to the common bus 115.

If the ground fault is not in an array subsection, the power system controller proceeds to step 540 where the power system controller 130 determines whether the ground fault is in one of the converters 110. If the ground fault is in one of the converters 110, the power system controller 130 proceeds to step 545, where the power system controller 130 determines which converter 110 has the fault and turns the converter 110 off in order to isolate the fault from the rest of the power system 100. A ground fault in a converter 110 is an internal ground fault and does not cause the failed converters to exhibit the slow-rising signal described above.

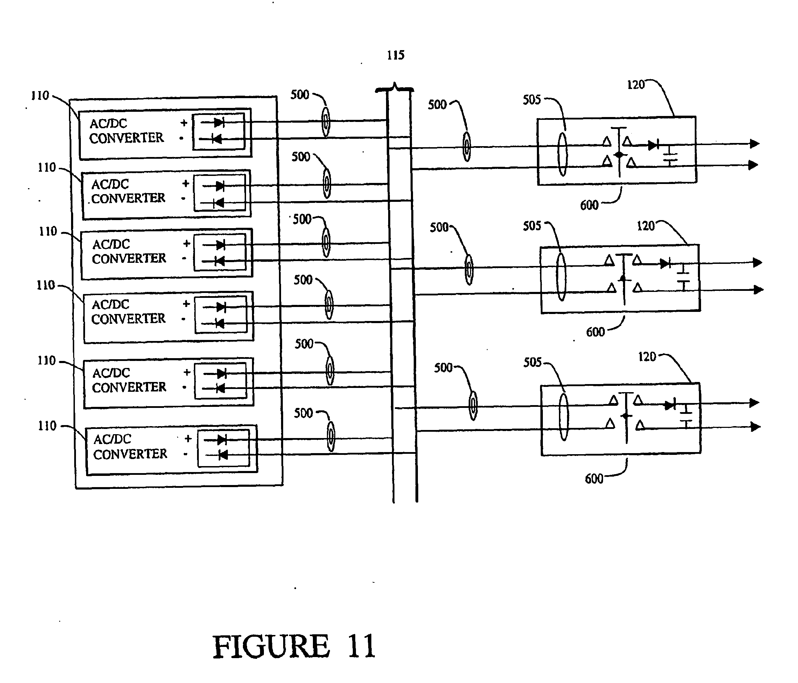

If the ground fault is not in a converter, the power system controller 130 proceeds to step 550, where the power system controller 130 determines whether the ground fault is in an array section. At step 555, if the ground fault is in an array section, then a contactor 600 (Figure 11) in a capacitor bank 120 coupled to the array section isolates the fault.

If the ground fault is not in an array section, then the power system controller 130 proceeds to step 560, where the power system controller 130 determines whether the ground fault is in the common bus. If there is no ground fault in the common bus, the power system controller proceeds to step 515 and continues operation. If there is a common bus ground fault, then the power system controller 130 proceeds to step 565 where it disconnects prime power so that the power system 100 can be repaired.

Further details of the power system of Figure 1 will now be explained with reference to Figure 11. Figure 11 is a block diagram of the AC/DC converters 110 and the common bus 115 that feeds the array 125 through the capacitor banks 120. First Hall effect current sensors 500 are placed on all the common bus positive inputs from AC/DC converters 110 and positive outputs to capacitor banks 120. In an alternative embodiment of the invention, the first Hall effect sensors 500 are placed on the negative inputs from the AC/DC converters and the negative outputs to the capacitor banks 120. Second Hall effect sensors 500 are placed at the positive and negative inputs from the common bus 115 in the capacitor banks 120. Each capacitor bank 120 has a contactor 600, which is a type of switch, used, as described above to isolate ground fault detected by the ground fault detector 450.

The first Hall effect sensors feed signals to the bus fault detector 455. The bus fault detector 455 subtracts the sum of the bus input signals from sum of the bus output signals. Under normal operating conditions, the result of this subtraction is zero because under "no fault' operating conditions the current flowing into the common bus 115 equals the current flowing out of the common bus 115. A fault on the common bus 115 is indicated when input current to the common bus 115 does not equal output current from the common bus 115. The second Hall effect sensors 505 are ground fault Hall effect current sensors and are used in the capacitor bank assemblies to detect a ground fault located between the capacitor banks 120 and the antenna array 125. Normally, equal current flows through each leg of a capacitor bank 120 and the output of the ground fault Hall effect sensor 505 is zero because the currents flow in opposite directions through it. When a ground fault occurs between a capacitor bank 120 and an antenna array 125, more current flows in one capacitor bank leg than the other and the ground fault Hall effect sensor 505 sends an output signal to the bus fault detector 455.

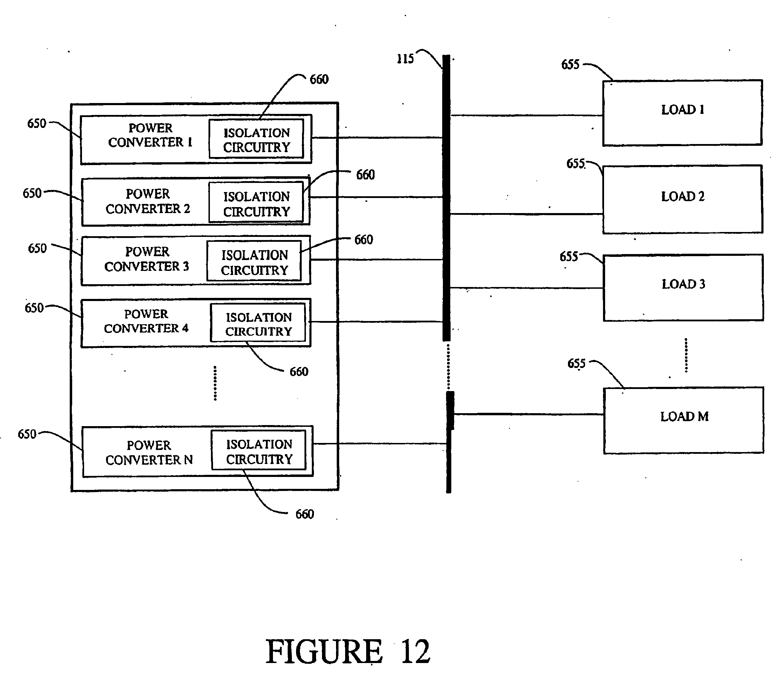

Figure 12 shows a generalized system having a partial power system with a plurality of power converters 650, power converters 1-N, and a plurality of loads 655, loads 1-M, coupled to the common bus 115. Each power converter 650 has isolation circuitry 660 through which the power converter 650 is coupled to the common bus 115. The invention described with regard to Figures 1-11 above can be successfully implemented in any system where multiple converters are coupled to a common bus. For example, the invention may be implemented using any type of power converter including AC/AC converters, DC/DC converters, AC/DC converters and DC/AC converters. For a power converter 650 having a DC output, the isolation circuitry 660 comprises diodes as shown in Figure 1. For a power converter 650 having an AC output, the isolation circuitry 660 is a composite switch, typically a diode combined with a transistor. The present invention is also not limited to a load of a phased-array radar antenna but may be used to provide power to other types of loads.

It is to be understood that the above-described embodiments are simply illustrative of the principles of the invention.

## Claims

1. A power system (100) for a radar antenna, comprising:
a multiphase transformer (105);
a common bus (115); and
a plurality of power converters (110, 110-1, 110-2, 110-3, 110-4, 650) coupled in parallel to said multiphase transformer (105) and said common bus (115), each said power converter (110, 110-1, 110-2, 110-3, 110-4, 650) having a multisloped power output characteristic to enable power sharing by said plurality of power converters (110, 110-1, 110-2, 110-3, 110-4, 650), wherein each said power converter (110, 110-1, 110-2, 110-3, 110-4) further comprises:
an output voltage loop controller (300);
an output power loop controller (305);
an output current loop controller (310),
where said output voltage loop controller (300), said output power loop controller (305) and said output current loop controller (310) together provide said multi-sloped power output characteristic, said power converter (110, 110-1, 110-2, 110-3, 110-4, 650) being adapted to provide:
a constant voltage in a voltage mode controlled by said output voltage loop controller (300),
an increasing current while voltage is decreasing in a constant power mode controlled by said output power loop controller (305), and
a constant current in a current mode controlled by said output current loop controller (310).

2. The power system (100) of claim 1, wherein said plurality of power converters (110, 110-1, 110-2, 110-3, 110-4, 650) is adapted to co-operate to balance the power provided among said plurality of power converters (110, 110-1, 110-2, 110-3, 110-4, 650).

3. The power system (100) of claim 1 or 2, wherein one of said plurality of power converters (110, 110-1, 110-2, 110-3, 110-4, 650) operates to provide power to the radar antenna in said constant voltage mode and wherein at least one of said plurality of power converters (110, 110-1, 110-2, 110-3, 110-4, 650) operates to provide power to the antenna in constant power mode

4. The power system (100) of claim 1, wherein said common bus (115) is a balanced bus with respect to ground.

5. The power system (100) of claim 4, wherein said common bus (115) is balanced at +150 V and -150 V.

6. The power system (100) of claim 1, wherein each said power converter (110, 110-1, 110-2, 110-3, 110-4, 650) includes a ground fault detection circuit (450) having a sensing resistor (220-1, 220-2) to detect current resulting from a ground fault.

7. The power system (100) of claim 6, wherein said ground fault detection circuit (450) further includes time delay devices to provide a time delay in a current detection signal to a power system controller (130) generated in response to a current at said sensing resistor (220-1, 220-2), the delay to distinguish a current detection signal from a power converter (110, 110-1, 110-2, 110-3, 110-4, 650) having a ground fault from a power converter (110, 110-1, 110-2, 110-3, 110-4, 650) without a ground fault.

8. The power system (100) of claim 7, wherein said time delay devices delay a current detection signal from said power converter (110, 110-1, 110-2, 110-3, 110-4, 650) without a ground fault so that a current detection signal from said power converter (110, 110-1, 110-2, 110-3, 110-4, 650) having a ground fault has a faster rate of rise.

9. The power system (100) of claim 7, wherein said time delay devices comprise a balun (225) and a sensing resistor (220-1, 220-2).

10. The power system (100) of claim 6, wherein a fast-rising signal from said sensing resistor (220-1, 220-2) indicates that said converter (110, 110-1, 110-2, 110-3, 110-4, 650) has failed thereby signaling to the power system to take said converter (110, 110-1, 110-2, 110-3, 110-4, 650) off-line.

11. The power system (100) of claim 6, wherein each said ground fault detection system (450) of each converter (110, 110-1, 110-2, 110-3, 110-4, 650) generates a current in response to an external ground fault, said currents to combine into a combined ground fault detection current, said power system (100) further comprising a fuse (225-1, 225-2, 260-1, 260-2) **characterized** and located to fall when said fuse (255-1, 255-2, 260-1, 260-2) receives said combined ground fault detection current.

12. The power system (100) of claim 1, further comprising:
a first Hall effect sensor (500) at an input of said bus (115) to sense input current to said bus (115) and a second Hall effect sensor (505) at an output of said bus (115) to detect output current from said bus (115); and
a common bus fault detector (455) in a power system controller (130) in said power system (100) to monitor said first Hall effect sensor (500) and said second Hall effect sensor (505) to determine a difference between said input current and said output current to detect a fault in said common bus (115).

13. A method of supplying power from a plurality of power converters (110, 110-1, 110-2, 110-3, 110-4, 650) to a radar antenna, each converter (110, 110-1, 110-2, 110-3, 110-4, 650) of the plurality having a voltage loop controller (300), a power loop controller (305), and a current loop controller (310), the power converters (110, 110-1, 110-2, 110-3, 110-4, 650) being coupled at their outputs to a common DC bus (115), and the method comprising the steps of:
providing power from one power converter of said plurality (110, 110-1, 110-2, 110-3, 110-4, 650) by controlling said plurality of power converters (110, 110-1, 110-2, 110-3, 110-4, 650) by the voltage loop controllers (300) until power required by the radar antenna causes an output feedback voltage of said one power converter to exceed a voltage limit;
providing power from at least two power converters of said plurality of power converters (110, 110-1, 110-2, 110-3, 110-4, 650) by controlling said plurality of converters (110, 110-1, 110-2, 110-3, 110-4, 650) with the power loop controllers (305) until power required by the radar antenna exceeds a power limit for said at least two power converters; and
providing a constant current from the plurality of power converters (110, 110-1, 110-2, 110-3, 110-4, 650) by controlling said plurality of power converters (110, 110-1, 110-2, 110-3, 110-4, 650) by the current loop controllers (310).

14. The method of claim 13, wherein the step of providing power from at least two power converters in constant power mode further comprises the steps of first providing power from a converter having a highest output voltage, and then as voltage level decreases in constant power mode, providing power from a converter of said plurality (110, 110-1, 110-2, 110-3, 110-4, 650) having a second highest output voltage.

15. The method of claim 13 or 14 further comprising the steps of:
continuously measuring converter output voltage and converter output current;
controlling each converter (110, 110-1, 110-2, 110-3, 110-4, 650) using the voltage loop controller (300) to provide a substantially constant voltage while the output voltage is greater than a first voltage threshold and less than output voltage without a load on the converter (110, 110-1, 110-2, 110-3, 110-4, 650), and while output current is greater than zero and less than a first current threshold whereby the converter (110, 110-1, 110-2, 110-3, 110-4, 650) provides power for a light load on the converter (110, 110-1, 110-2, 110-3, 110-4, 650);
controlling each converter (110, 110-1, 110-2, 110-3, 110-4, 650) using a power loop controller (305) to provide substantially constant power while the output voltage is greater than a second voltage threshold and less than the first voltage threshold and while output current is greater than the first current threshold and less than a second current threshold whereby the converter (110, 110-1, 110-2, 110-3, 110-4, 650) provides power for a high load;
controlling each converter (110, 110-1, 110-2, 110-3, 110-4, 650) using a current loop controller (310) to provide substantially constant current while the output voltage is greater than a third voltage threshold and less than the second voltage threshold and while output current is greater than the second current threshold and less than a third current threshold whereby the converter (110, 110-1, 110-2, 110-3, 110-4, 650) operates at substantially constant current when the load on the converter (110, 110-1, 110-2, 110-3, 110-4, 650) exceeds a converter power limit; and
controlling each converter (110, 110-1, 110-2, 110-3, 110-4, 650) using a foldback circuit (335) while the output voltage is greater than zero and less than third voltage threshold whereby the converter (110, 110-1, 110-2, 110-3, 110-4, 650) recovers from an overload condition.

## Patentansprüche

1. Energiesystem (100) für eine Radarantenne, mit:
einem Multiphasentransformator (105);
einem gemeinsamen Bus (115); und
einer Vielzahl von Stromrichtern (110, 110-1, 110-2, 110-3, 110-4, 650), die parallel zu dem Multiphasentransformator (105) und dem gemeinsamen Bus (115) gekoppelt sind, wobei jeder Stromrichter (110, 110-1, 110-2, 110-3, 110-4, 650) eine Mehr-Flanken-Ausgabe-Leistungscharakteristik aufweist, um ein Leistungsteilen durch die Vielzahl von Stromrichtern (110, 110-1, 110-2, 110-3, 110-4, 650) zu ermöglichen, wobei jeder Stromrichter (110, 110-1, 110-2, 110-3, 110-4) ferner aufweist:
eine Ausgabespannungsregeleinheit (300);
eine Ausgabeleistungsregeleinheit (305);
eine Ausgabestromregeleinheit (310),
wobei die Ausgabespannungsregeleinheit (300), die Ausgabeleistungsregeleinheit (305) und die Ausgabestromregeleinheit (310) zusammen die Mehr-Flanken-Ausgabe-Leistungscharakteristik bereitstellen, wobei der Stromrichter (110, 110-1, 110-2, 110-3, 110-4, 650) geeignet ist, um bereitzustellen:
eine konstante Spannung in einem Spannungsmodus, der durch die Ausgabespannungsregeleinheit (300) geregelt wird,
einen ansteigenden Strom während die Spannung gesenkt wird in einem konstanten Leistungsmodus, der durch die Ausgabeleistungsregeleinheit (305) geregelt wird, und
einen konstanten Strom in einem Strommodus, der durch die Ausgabestromregeleinheit (310) geregelt wird.

2. Energiesystem (100) nach Anspruch 1, wobei die Vielzahl von Stromrichtern (110, 110-1, 110-2, 110-3, 110-4, 650) geeignet ist, um zusammen zu wirken, um die Leistung, die von der Vielzahl von Stromrichtern (110, 110-1, 110-2, 110-3, 110-4, 650) bereitgestellt wird, auszugleichen.

3. Energiesystem (100) nach Anspruch 1 oder 2, wobei einer der Vielzahl von Stromrichtern (110, 110-1, 110-2, 110-3, 110-4, 650) arbeitet, um der Radarantenne in dem konstanten Spannungsmodus Leistung zur Verfügung zu stellen, und wobei wenigstens einer der Vielzahl von Stromrichtern (110, 110-1, 110-2, 110-3, 110-4, 650) arbeitet, um der Antenne Leistung in einem konstanten Leistungsmodus bereitzustellen.

4. Energiesystem (100) nach Anspruch 1, wobei der gemeinsame Bus (115) ein bezüglich der Erdung ausgeglichener Bus ist.

5. Energiesystem (100) nach Anspruch 4, wobei der gemeinsame Bus (115) zu +150 V und -150 V ausgeglichen ist.

6. Energiesystem (100) nach Anspruch 1, wobei jeder Stromrichter (110, 110-1, 110-2, 110-3, 110-4, 650) eine Erdschlusserkennungsschaltung (450) mit einem Messwiderstand (220-1, 220-2) zum Erkennen eines Stroms aufweist, der aus einem Erdschluss resultiert.

7. Energiesystem (100) nach Anspruch 6, wobei die Erdschlusserkennungsschaltung (450) ferner Zeitverzögerungsvorrichtungen zum Bereitstellung einer Zeitverzögerung in einem Stromerkennungssignal an eine Energiesystemsteuereinheit (130) aufweist, welches in Antwort auf einen Strom an dem Messwiderstand (220-1, 220-2) erzeugt wird, wobei die Verzögerung ausgestaltet ist, um ein Stromerkennungssignal von einem Stromrichter (110, 110-1, 110-2, 110-3, 110-4, 650) mit einem Erdschluss von einem Stromrichter (110, 110-1, 110-2, 110-3, 110-4, 650) ohne einen Erdschluss zu unterscheiden.

8. Energiesystem (100) nach Anspruch 7, wobei die Zeitverzögerungsvorrichtungen ein Stromerkennungssignal von dem Stromrichter (110, 110-1, 110-2, 110-3, 110-4, 650) ohne einen Erdschluss verzögern, sodass ein Stromerkennungssignal von dem Stromrichter (110, 110-1, 110-2, 110-3, 110-4, 650) mit einem Erdschluss eine schnellere Steiggeschwindigkeit aufweist.

9. Energiesystem (100) nach Anspruch 7, wobei die Zeitverzögerungsvorrichtungen einen Balun (225) und einen Messwiderstand (220-1, 220-2) aufweisen.

10. Energiesystem (110) nach Anspruch 6, wobei ein schnellsteigendes Signal von dem Messwiderstand (220-1, 220-2) anzeigt, dass der Stromrichter (110, 110-1, 110-2, 110-3, 110-4, 650) fehlerhaft arbeitet, wodurch dem Energiesystem angezeigt wird, den Stromrichter (110, 110-1, 110-2, 110-3, 110-4, 650) außer Betrieb zu nehmen.

11. Energiesystem (100) nach Anspruch 6, wobei das Erdschlusserkennungssystem (450) jedes Stromrichters (110, 110-1, 110-2, 110-3, 110-4, 650) einen Strom in Antwort auf einen externen Erdschluss erzeugt, wobei die Ströme zum Zusammenfassen zu einem kombinierten Erdschlusserkennungsstrom ausgestaltet sind, wobei das Energiesystem (100) ferner eine Sicherung (255-1, 255-2, 260-1,260-2) aufweist, die **dadurch gekennzeichnet** und angeordnet ist, um auszulösen, wenn die Sicherung (255-1, 255-1, 260-1, 260-2) den kombinierten Erdschlusserkennungsstrom empfängt.

12. Energiesystem (100) nach Anspruch 1, ferner mit:
einem ersten Hall-Effekt-Sensor (500) an einem Eingang des Busses (115), um einen Eingabestrom zu dem Bus (115) zu messen, und einem zweiten Hall-Effekt-Sensor (505) an einem Eingang des Busses (115), um einen Ausgabestrom von dem Bus (115) zu erkennen; und
einer Fehlererkennungseinheit für den gemeinsamen Bus (455) in einer Energiesystemsteuereinheit (130) in dem Energiesystem (100) zum Überwachen des ersten Hall-Effekt-Sensors (500) und des zweiten Hall-Effekt-Sensors (505), um einen Unterschied zwischen dem Eingabestrom und dem Ausgabestrom zum Erkennen eines Fehlers in dem gemeinsamen Bus (115) zu bestimmen.

13. Verfahren eines Bereitstellens von Energie von einer Vielzahl von Stromrichtern (110, 110-1, 110-2, 110-3, 110-4, 650) an eine Radarantenne, wobei jeder Stromrichter (110, 110-1, 110-2, 110-3, 110-4, 650) der Vielzahl eine Spannungsregeleinheit (300), eine Leistungsregeleinheit (305) und eine Stromregeleinheit (310) aufweist, wobei die Stromrichter (110, 110-1, 110-2, 110-3, 110-4, 650) an ihren Ausgängen an einen gemeinsamen Gleichstrombus (115) gekoppelt sind, und wobei das Verfahren die Schritte aufweist:
Bereitstellen von Leistung von einem Stromrichter der Vielzahl (110, 110-1, 110-2, 110-3, 110-4, 650) durch Regeln der Vielzahl von Stromrichtern (110, 110-1, 110-2, 110-3, 110-4, 650) durch die Spannungsregeleinheiten (300) bis eine Leistung, die durch die Radarantenne benötigt wird, eine Ausgaberückkopplungsspannung des einen Stromrichters verursacht, einen Spannungsgrenzwert zu überschreiten;
Bereitstellen von Leistung von wenigstens zwei Stromrichtern der Vielzahl von Stromrichtern (110, 110-1, 110-2, 110-3, 110-4, 650) durch Regeln der Vielzahl von Stromrichtern (110, 110-1, 110-2, 110-3, 110-4, 650) mit den Leistungsregeleinheiten (305) bis eine Leistung, die durch die Radarantenne benötigt wird, einen Leistungsgrenzwert für die wenigstens zwei Stromrichter überschreitet; und
Bereitstellen eines konstanten Stromes von der Vielzahl von Stromrichtern (110, 110-1, 110-2, 110-3, 110-4, 650) durch Regeln der Vielzahl von Stromrichtern (110, 110-1, 110-2, 110-3, 110-4, 650) durch die Stromregeleinheiten (310).

14. Verfahren nach Anspruch 13, wobei der Schritt eines Bereitstellens von Leistung von wenigstens zwei Stromrichtern in einem konstanten Leistungsmodus ferner die Schritte eines ersten Bereitstellens von Leistung von einem Stromrichter mit einer höchsten Ausgabespannung aufweist, und dann, wenn der Spannungspegel in einem konstanten Leistungsmodus sinkt, Bereitstellen von Leistung von einem Stromrichter der Vielzahl (110, 110-1, 110-2, 110-3, 110-4, 650) mit einer zweihöchsten Ausgabespannung.

15. Verfahren nach Anspruch 13 oder 14, ferner mit den Schritten:
kontinuierliches Messen einer Stromrichterausgabespannung und einem Stromrichterausgabestrom;
Regeln jedes Stromrichters (110, 110-1, 110-2, 110-3, 110-4, 650) unter Verwendung der Spannungsregeleinheit (300) zum Bereitstellen einer im Wesentlichen konstanten Spannung während die Ausgabespannung größer als ein erster Spannungsschwellwert und weniger als eine Ausgabespannung ohne eine Last an dem Stromrichter (110, 110-1, 110-2, 110-3, 110-4, 650) ist, und während ein Ausgabestrom größer als Null und weniger als ein erster Stromschwellwert ist, wobei der Stromrichter (110, 110-1, 110-2, 110-3, 110-4, 650) Leistung für eine leichte Last an dem Stromrichter (110, 110-1, 110-2, 110-3, 110-4, 650) bereitstellt;
Regeln jedes Stromrichters (110, 110-1, 110-2, 110-3, 110-4, 650) unter Verwendung einer Leistungsregeleinheit (305) zum Bereitstellen einer im Wesentlichen konstanten Leistung während die Ausgabespannung größer als ein zweiter Spannungsschwellwert und weniger als der erste Spannungsschwellwert ist und während ein Ausgabestrom größer als der erste Stromschwellwert und weniger als ein zweiter Stromschwellwert ist, wobei der Stromrichter (110, 110-1, 110-2, 110-3, 110-4, 650) Leistung für eine hohe Last bereitstellt;
Regeln jedes Stromrichters (110, 110-1, 110-2, 110-3, 110-4, 650) unter Verwendung einer Stromregeleinheit (310) zum Bereitstellen eines im Wesentlichen konstanten Stromes während die Ausgabespannung größer als ein dritter Spannungsschwellwert und weniger als der zweite Spannungsschwellwert ist und während ein Ausgabestrom größer als der zweite Stromschwellwert und weniger als ein dritter Stromschwellwert ist, wobei der Stromrichter (110, 110-1, 110-2, 110-3, 110-4, 650) bei einem im Wesentlichen konstanten Strom arbeitet, wenn die Last an dem Stromrichter (110, 110-1, 110-2, 110-3, 110-4, 650) einen Stromrichterleistungsgrenzwert überschreitet; und
Regeln jedes Stromrichters (110, 110-1, 110-2, 110-3, 110-4, 650) unter Verwendung einer Foldback-Schaltung (335) während die Ausgabespannung größer als Null und weniger als der dritte Spannungsschwellwert ist, wodurch sich der Stromrichter (110, 110-1, 110-2, 110-3, 110-4, 650) von einem Überlastzustand erholt.

## Revendications

1. Système d'alimentation (100) pour une antenne radar, comprenant :
un transformateur multiphasé (105) ;
un bus commun (115) ; et
une pluralité de convertisseurs de puissance (110, 110-1, 110-2, 110-3, 110-4, 650) couplés en parallèle audit transformateur multiphasé (105) et audit bus commun (115), chacun desdits convertisseurs de puissance (110, 110-1, 110-2, 110-3, 110-4, 650) ayant une caractéristique de sortie de puissance multipente pour permettre le partage de la puissance par ladite pluralité de convertisseurs de puissance (110, 110-1, 110-2, 110-3, 110-4, 650), dans lequel chacun desdits convertisseurs de puissance (110, 110-1, 110-2, 110-3, 110-4) comprend en outre :
un contrôleur de boucle de tension de sortie (300) ;
un contrôleur de boucle de puissance de sortie (305) ;
un contrôleur de boucle de courant de sortie (310),
où ledit contrôleur de boucle de tension de sortie (300), ledit contrôleur de boucle de puissance de sortie (305) et ledit contrôleur de boucle de courant de sortie (310) fournissent ensemble ladite caractéristique de sortie de puissance multipente, ledit convertisseur de puissance (110, 110-1, 110-2, 110-3, 110-4, 650) étant conçu pour fournir :
une tension constante dans un mode de tension contrôlé par ledit contrôleur de boucle de tension de sortie (300),
un courant croissant tandis que la tension diminue dans un mode de puissance constante contrôlé par ledit contrôleur de boucle de puissance de sortie (305), et
un courant constant dans un mode de courant contrôlé par ledit contrôleur de boucle de courant de sortie (310).

2. Système d'alimentation (100) selon la revendication 1, dans lequel ladite pluralité de convertisseurs de puissance (110, 110-1, 110-2, 110-3, 110-4, 650) est conçue pour coopérer afin d'équilibrer la puissance fournie parmi ladite pluralité de convertisseurs de puissance (110, 110-1, 110-2, 110-3, 110-4, 650).

3. Système d'alimentation (100) selon la revendication 1 ou 2, dans lequel l'un de ladite pluralité de convertisseurs de puissance (110, 110-1, 110-2, 110-3, 110-4, 650) sert à fournir de la puissance à l'antenne radar dans ledit mode de tension constante et dans lequel au moins l'un de ladite pluralité de convertisseurs de puissance (110, 110-1, 110-2, 110-3, 110-4, 650) sert à fournir de la puissance à l'antenne en mode de puissance constante.

4. Système d'alimentation (100) selon la revendication 1, dans lequel ledit bus commun (115) est un bus équilibré par rapport à la masse.

5. Système d'alimentation (100) selon la revendication 4, dans lequel ledit bus commun (115) est équilibré à + 150 V et - 150 V.

6. Système d'alimentation (100) selon la revendication 1, dans lequel chacun desdits convertisseurs de puissance (110, 110-1, 110-2, 110-3, 110-4, 650) comprend un circuit de détection de défaut à la masse (450) ayant une résistance de détection (220-1, 220-2) pour détecter le courant résultant d'un défaut à la terre.

7. Système d'alimentation (100) selon la revendication 6, dans lequel ledit circuit de détection de défaut à la masse (450) comprend en outre des dispositifs de temporisation pour fournir une temporisation dans un signal de détection de courant à un contrôleur de système d'alimentation (130) généré en réponse à un courant au niveau de ladite résistance de détection (220-1, 220-2), le retard étant destiné à distinguer un signal de détection de courant provenant d'un convertisseur de puissance (110, 110-1, 110-2, 110-3, 110-4, 650) présentant un défaut à la masse provenant d'un convertisseur de puissance (110, 110-1, 110-2, 110-3, 110-4, 650) sans défaut à la masse.

8. Système d'alimentation (100) selon la revendication 7, dans lequel lesdits dispositifs de temporisation retardent un signal de détection de courant provenant dudit convertisseur de puissance (110, 110-1, 110-2, 110-3, 110-4, 650) sans défaut à la masse de telle sorte qu'un signal de détection de courant provenant dudit convertisseur de puissance (110, 110-1, 110-2, 110-3, 110-4, 650) présentant un défaut à la masse ait un taux plus rapide d'augmentation en intensité.

9. Système d'alimentation (100) selon la revendication 7, dans lequel lesdits dispositifs de temporisation comprennent un symétriseur (225) et une résistance de détection (220-1, 220-2).

10. Système d'alimentation (100) selon la revendication 6, dans lequel un signal à croissance rapide provenant de ladite résistance de détection (220-1, 220-2) indique que ledit convertisseur (110, 110-1, 110-2, 110-3, 110-4, 650) est tombé en panne, signalant ainsi au système d'alimentation qu'il doit mettre hors circuit ledit convertisseur (110, 110-1, 110-2, 110-3, 110-4, 650).

11. Système d'alimentation (100) selon la revendication 6, dans lequel chacun desdits systèmes de détection de défaut à la masse (450) de chaque convertisseur (110, 110-1, 110-2, 110-3, 110-4, 650) génère un courant en réponse à un défaut à la masse externe, lesdits courants devant se combiner en un courant de détection de défaut à la masse combiné, ledit système d'alimentation (100) comprenant en outre un fusible (225-1, 225-2, 260-1, 260-2) **caractérisé** et localisé de manière à s'arrêter lorsque ledit fusible (225-1, 225-2, 260-1, 260-2) reçoit ledit courant de détection de défaut à la masse combiné.

12. Système d'alimentation (100) selon la revendication 1, comprenant en outre :
un premier capteur à effet Hall (500) au niveau d'une entrée dudit bus (115) pour détecter le courant d'entrée vers ledit bus (115) et un second capteur à effet Hall (505) au niveau d'une sortie dudit bus (115) pour détecter le courant de sortie provenant dudit bus (115) ; et
un détecteur de panne de bus commun (455) dans un contrôleur de système d'alimentation (130) dudit système d'alimentation (100) pour surveiller ledit premier capteur à effet Hall (500) et ledit second capteur à effet Hall (505) pour déterminer une différence entre ledit courant d'entrée et ledit courant de sortie pour détecter une panne dans ledit bus commun (115).

13. Procédé destiné à alimenter une antenne radar à partir d'une pluralité de convertisseurs de puissance (110, 110-1, 110-2, 110-3, 110-4, 650), chaque convertisseur (110, 110-1, 110-2, 110-3, 110-4, 650) de la pluralité ayant un contrôleur de boucle de tension (300), un contrôleur de boucle de puissance (305) et un contrôleur de boucle de courant (310), les convertisseurs de puissance (110, 110-1, 110-2, 110-3, 110-4, 650) étant couplés au niveau de leurs sorties à un bus de courant continu commun (115), et le procédé comprenant les étapes consistant à :
fournir de la puissance à partir d'un convertisseur de puissance de ladite pluralité de convertisseurs de puissance (110, 110-1, 110-2, 110-3, 110-4, 650) en contrôlant ladite pluralité de convertisseurs de puissance (110, 110-1, 110-2, 110-3, 110-4, 650) grâce aux contrôleurs de boucle de tension (300) jusqu'à ce que la puissance requise par l'antenne radar provoque le dépassement d'une limite de tension par une tension de réaction de sortie dudit un convertisseur de puissance ;
fournir une puissance à partir d'au moins deux convertisseurs de puissance de ladite pluralité de convertisseurs de puissance (110, 110-1, 110-2, 110-3, 110-4, 650) en contrôlant ladite pluralité de convertisseurs (110, 110-1, 110-2, 110-3, 110-4, 650) avec les contrôleurs de boucle de puissance (305) jusqu'à ce que la puissance requise par l'antenne radar dépasse une limite de puissance pour lesdits au moins deux convertisseurs de puissance ; et
fournir un courant constant à partir de la pluralité de convertisseurs de puissance (110, 110-1, 110-2, 110-3, 110-4, 650) en contrôlant ladite pluralité de convertisseurs de puissance (110, 110-1, 110-2, 110-3, 110-4, 650) grâce aux contrôleurs de boucle de courant (310).

14. Procédé selon la revendication 13, dans lequel l'étape consistant à fournir une puissance à partir d'au moins deux convertisseurs de puissance en mode de puissance constante comprend en outre les étapes consistant à fournir d'abord une puissance à partir d'un convertisseur ayant une tension de sortie la plus élevée et ensuite, lorsque le niveau de tension diminue en mode de puissance constante, fournir une puissance à partir d'un convertisseur de ladite pluralité (110, 110-1, 110-2, 110-3, 110-4, 650) ayant une seconde tension de sortie la plus élevée.

15. Procédé selon la revendication 13 ou 14, comprenant en outre les étapes consistant à :
mesurer en continu la tension de sortie de convertisseur et le courant de sortie de convertisseur ;
contrôler chaque convertisseur (110, 110-1, 110-2, 110-3, 110-4, 650) en utilisant le contrôleur de boucle de tension (300) de manière à fournir une tension sensiblement constante alors que la tension de sortie est supérieure à un premier seuil de tension et inférieure à la tension de sortie sans une charge sur le convertisseur (110, 110-1, 110-2, 110-3, 110-4, 650) et alors que le courant de sortie est supérieur à zéro et inférieur à un premier seuil de courant, moyennant quoi le convertisseur (110, 110-1, 110-2, 110-3, 110-4, 650) fournit une puissance pour une charge faible sur le convertisseur (110, 110-1, 110-2, 110-3, 110-4, 650) ;
contrôler chaque convertisseur (110, 110-1, 110-2, 110-3, 110-4, 650) au moyen d'un contrôleur de boucle de puissance (305) afin de fournir une puissance sensiblement constante alors que la tension de sortie est supérieure à un deuxième seuil de tension et inférieure au premier seuil de tension et alors que le courant de sortie est supérieur au premier seuil de courant et inférieur à un deuxième seuil de courant, moyennant quoi le convertisseur (110, 110-1, 110-2, 110-3, 110-4, 650) fournit une puissance pour une charge élevée ;
contrôler chaque convertisseur (110, 110-1, 110-2, 110-3, 110-4, 650) au moyen d'un contrôleur de boucle de courant (310) afin de fournir un courant sensiblement constant alors que la tension de sortie est supérieure à un troisième seuil de tension et inférieure au deuxième seuil de tension et alors que le courant de sortie est supérieur au deuxième seuil de courant et inférieur à un troisième seuil de courant, moyennant quoi le convertisseur (110, 110-1, 110-2, 110-3, 110-4, 650) fonctionne à un courant sensiblement constant lorsque la charge sur le convertisseur (110, 110-1, 110-2, 110-3, 110-4, 650) dépasse une limite de puissance de convertisseur ; et
contrôler chaque convertisseur (110, 110-1, 110-2, 110-3, 110-4, 650) au moyen d'un circuit de repli (335) alors que la tension de sortie est supérieure à zéro et inférieure au troisième seuil de tension, moyennant quoi le convertisseur (110, 110-1, 110-2, 110-3, 110-4, 650) récupère après un état de surcharge.
